(19) **Europäisches Patentamt / European Patent Office / Office européen des brevets**

(11) **EP 2 749 354 A1**

(12) **EUROPEAN PATENT APPLICATION**
published in accordance with Art. 153(4) EPC

(43) Date of publication:
**02.07.2014 Bulletin 2014/27**

(21) Application number: **12826098.1**

(22) Date of filing: **26.07.2012**

(51) Int Cl.:
**B01J 35/04** (2006.01)    **B01D 53/86** (2006.01)
**B01D 53/94** (2006.01)    **B01J 23/58** (2006.01)
**B01J 35/10** (2006.01)    **B01J 37/02** (2006.01)
**B01J 37/08** (2006.01)    **F01N 3/28** (2006.01)

(86) International application number:
**PCT/JP2012/068913**

(87) International publication number:
**WO 2013/027531 (28.02.2013 Gazette 2013/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.08.2011 JP 2011183535**

(71) Applicants:
- **DENSO CORPORATION**
  **Kariya-city,**
  **Aichi-pref. 448-8661 (JP)**
- **NISSAN MOTOR CO., LTD.**
  **Yokohama-shi,**
  **Kanagawa 221-0023 (JP)**

(72) Inventors:
- **ONO, Yoshihisa**
  **Kariya-city**
  **Aichi-pref. 448-8661 (JP)**
- **HANAKI, Yasunari**
  **Yokohama-shi**
  **Kanagawa 221-0023 (JP)**
- **IIO, Shinichi**
  **Yokohama-shi**
  **Kanagawa 221-0023 (JP)**

(74) Representative: **TBK**
**Bavariaring 4-6**
**80336 München (DE)**

(54) **CATALYST SUPPORT AND MANUFACTURING METHOD THEREFOR**

(57)    A catalyst supporting body 1 has a porous honeycomb base body 2 having a porosity within a range of 40 to 60 vol.%. The body 2 has a plurality of cells 22 partitioned by cell walls 21 arranged in a lattice-like shape. A coated catalyst layer 3 made of a porous body having a void fraction of void spaces within a range of 50 to 63 vol.% is particularly supported on surfaces of the cell walls 21 and in pores 216 formed in the cell walls 21 by a filling rate of not less than 40 vol.%. In an immersing step of a manufacturing method, a combination of a kind of catalyst slurry and the porous honeycomb base body is selected so that a cumulative-frequency at an intersection point between a pore distribution map and a particle size distribution map becomes not less than 80 %. The pore distribution map indicates a relationship between pore sizes of pores in the porous honeycomb base body and a cumulative-frequency of the pores. The particle size distribution map indicates a relationship between particle size in the catalyst slurry and a cumulative-frequency of the particles.

FIG.3

**Description**

[Technical Field]

The present invention relates to catalyst supporting bodies comprised of a honeycomb base body which supports a coated catalyst layer having a purification performance capable of purifying exhaust gas.

[Background art]

Catalyst supporting bodies have been used for purifying toxic substances, for example, carbon monoxide (CO), nitrogen oxides (NOx), etc. contained in exhaust gas emitted from motor vehicles. (See patent document 1 and patent document 2.)

For example, a catalyst supporting body has been used, which is comprised of a porous honeycomb base body and a coated catalyst layer. The coated catalyst layer contains noble metals such as Pt, Pd, Rh and supporting component such as alumina. The porous honeycomb base body is made of cordierite, etc. Cell walls of the porous honeycomb base body support the coated catalyst layer thereon. Using the catalyst supporting body having such a structure can eliminate hydro carbon, carbon monoxide, and nitric oxide (NO) contained in exhaust gas to purify the exhaust gas.

There is a demand for such a catalyst supporting body to reduce its weight, have a low pressure loss, and increase its purification performance. In order to decreases its weight and have a low pressure loss, there have been proposed various techniques, one decreases a thickness of cell walls of the honeycomb base body, and another technique increases a porosity of the cell walls in the honeycomb base body. Further, another technique forms voids in the coated catalyst layer.

[Prior Art technical document]

[Patent document]

[Patent document 1] Japanese patent laid open publication No. JP H05-184937; and
[Patent document 2] Japanese patent laid open publication No. JP 2002-210370.

[Summary of the Invention]

[Problem to be solved by the Invention]

However, when such voids are formed in the coated catalyst layer in a honeycomb base body in order to increase the purification performance of the catalyst supporting body, there is a possibility of the coated catalyst layer being often separated from the cell walls of the porous honeycomb base body. This phenomenon decreases the purification performance of the catalyst supporting body. In particular, when a void fraction of void spaces formed in the coated catalyst layer increases to not less than a 20 vol.%, there is a possibility of the coated catalyst layer being easily separated from the cell walls of the porous honeycomb base body. Accordingly, the conventional techniques are difficult to adequately increase the purification performance of the catalyst supporting body even if increase the porosity of the coated catalyst layer.

The present invention is invented to solve the above problems. It is an object of the present invention to provide a catalyst supporting body having an excellent purification performance for purifying exhaust gas and a method of producing the catalyst supporting body.

[Means for solving the above problems]

In accordance with one aspect of the present invention, an exemplary embodiment provides a catalyst supporting body. The catalyst supporting body is comprised of a porous honeycomb base body having a porosity within a range of 40 to 60 vol.%. The porous honeycomb base body is comprised of a plurality of cells partitioned by cell walls arranged in a lattice-like shaped arrangement, a coated catalyst layer having a purification performance for purifying exhaust gas is supported at least on the cell walls of the porous honeycomb base body. The coated catalyst layer is comprised of a porous body having a void fraction of void spaces within a range of 50 to 63 vol.%. The coated catalyst layer is supported on surfaces of the cell walls and pores formed in the cell walls are filled with the coated catalyst layer by a filling rate of not less than 40 vol.% (as recited in claim 1).

In accordance with another exemplary embodiment of the present invention, there is provided a method of manufacturing the catalyst supporting body having the structure as previously described. The method has a step of immersing the porous honeycomb base body into a catalyst slurry in which catalyst material and burned-away material, which is used for forming the coated catalyst layer by performing the following firing step, are dispersed. The method further has a step of drying and firing the porous honeycomb base body processed by the immersing step in order to form the coated catalyst layer in the porous honeycomb base body. In the immersing step of the method, a combination of a kind of the catalyst slurry and the porous honeycomb base body is selected so that a cumulative frequency at an intersection point between a pore distribution map and a particle size distribution map becomes not less than 80 %. The pore distribution map indicates a relationship between pore sizes of pores formed in the porous honeycomb base body and a cumulative frequency of the pores in decreasing order in pore size from the maximum pore size. The particle size distribution map indicates a relationship between particle size of particles in the catalyst slurry and a cumulative frequency of the particles in increasing order in particle size from the minimum particle size (as recited in claim 7).

[Effects of the invention]

In the catalyst supporting body previously described, the coated catalyst layer having a purification performance for purifying exhaust gas is supported at least on the cell walls of the porous honeycomb base body having a porosity within a range of 40 to 60 vol.%. The coated catalyst layer is made of the porous body having a void fraction of void spaces within a range of 50 to 63 vol.%. The catalyst supporting body has therefore an excellent diffusibility for diffusing exhaust gas in the coated catalyst layer and an excellent purification performance for purifying exhaust gas. It is more preferable for the porous body of the coated catalyst layer to have a void fraction of void spaces within a range of 53 to 63 vol.%.

The coated catalyst layer is supported on the surfaces of the cell walls and in the pores of the cell walls formed in the porous honeycomb base body by a filling rate of not less than 40 vol.%. Thereby, the coated catalyst layer is adequately supported in the inside of the pores formed in the cell walls of the porous honeycomb base body. It is therefore possible for the porous honeycomb base body to adequately support the coated catalyst layer having a high void fraction of void spaces within a range of 50 to 63 vol.%. This makes it possible to prevent separation of the coated catalyst layer from the cell walls, and to increase a thermal shock resistance of the catalyst supporting body. Therefore the catalyst supporting body shows an excellent purification performance for purifying exhaust gas. It is more preferable for the coated catalyst layer to have the filling rate (portion of non-void) within a range of 57 to 85 vol.%, and most preferable to have the filling rate within a range of 74 to 85 vol.%, where the filling rate is a rate for filling the inside of the pores of the cell walls in the porous honeycomb base body with the coated catalyst layer.

Next, the method manufactures the catalyst supporting body previously described by performing an immersing step and firing step.

In the immersing step, the porous honeycomb base body is immersed into the catalyst slurry in which catalyst and burned-away material to be used for forming the coated catalyst layer by the following firing step are dispersed. At this time, a combination of a kind of the catalyst slurry and the porous honeycomb base body is selected so that a cumulative frequency at an intersection point between a pore distribution map and a particle size distribution map becomes not less than 80 %. This pore distribution map indicates a relationship between pore sizes of pores formed in the porous honeycomb base body and a cumulative frequency of the pores in decreasing order in pore size from the maximum pore size. The particle size distribution map indicates a relationship between particle size in the catalyst slurry and a cumulative frequency of the particles in increasing order in particle size from the minimum particle size. The selected combination of the porous honeycomb base body and the catalyst slurry to have not less than 80 % of the cumulative frequency at the above intersection point makes it possible to adequately immerse the catalyst slurry containing the catalyst material into the inside of the pores formed in the porous honeycomb base body.

After the immersing step, the porous honeycomb base body is dried and fired in the firing step. This makes it possible to form the coated catalyst layer so that the coated catalyst layer is supported on the surfaces of the cell walls and the inside of the pores of the cell walls is filled with the coated catalyst layer. Because the immersing step adequately fills the inside of the pores in the porous honeycomb base body with the catalyst slurry, it is possible to form the coated catalyst layer in the inside of the pores by the filling rate of not less than 40 vol.% (more preferable, within a range of 57 to 85 vol. %, and most preferable within a range of 74 to 85 vol. %) after the completion of the firing step.

In addition, the burned-away material contained in the catalyst slurry is burned away during the firing step. This makes it possible to form the coated catalyst layer composed of the porous body having a large void fraction of void spaces within a range of 50 to 63 vol.% (more preferable, a void fraction of void spaces within a range of 53 vol. % to 63 vol. %). This makes it possible to obtain the catalyst supporting body having an excellent purification performance for purifying exhaust gas.

[BRIEF DESCRIPTION OF THE DRAWINGS]

[Figure 1] FIG. 1 is an overall view of a catalyst supporting body according to a first exemplary embodiment of the present invention.

[Figure 2] FIG. 2 is a view showing a cross section of the catalyst supporting body according to the first exemplary embodiment shown in FIG. 1.

[Figure 3] FIG. 3 is a view showing a partial cross section of cell walls formed in the catalyst supporting body according to the first exemplary embodiment shown in FIG. 1.

[Figure 4] FIG. 4 is a view explaining a pore distribution map and a particle size distribution map, the pore distribution map indicates a relationship between pore sizes ($\mu$m) of pores and a cumulative frequency (%) of the pores formed in a porous honeycomb base body, and the particle size distribution map indicates a relationship between particle size ($\mu$m) of particles and a cumulative frequency (%) of the particles in a catalyst slurry.

[Figure 5] FIG. 5 is a partial enlarged view showing the cell walls in the catalyst supporting body according to a second exemplary embodiment of the present invention.

[Figure 6] FIG. 6 is a view showing a flow chart of a method for manufacturing the catalyst supporting body according to the first exemplary embodiment shown in FIG. 1.

[Embodiments to execute the present invention]

Next, a description will be given of the catalyst supporting body according to preferred exemplary embodiment.

The catalyst supporting body has a porous honeycomb base body having a porosity within a range of 40 to 60 vol.% in which a coated catalyst layer is supported at least on/in cell walls.

When the porous honeycomb base body has a porosity of less than 40 vol.%, it is difficult to adequately fill the inside of pores formed in the porous honeycomb base body with the coated catalyst layer, and this case has a possibility of the coated catalyst layer having a high void fraction of void spaces being separated from the cell walls. This case has a possibility of a pressure loss of the porous honeycomb base body being increased. On the other hand, when the porous honeycomb base body has a porosity of more than 60 vol.%, there is a possibility of the strength of the porous honeycomb base body being drastically decreased and it becoming difficult to handle the catalyst supporting body.

Further, the coated catalyst layer is comprised of the porous body having a void fraction of void spaces within a range of 50 to 63 vol.%.

When the porous body of the coated catalyst layer has a void fraction of void spaces of less than 50 vol.%, there is a possibility of it being difficult to adequately improve the purification performance for purifying exhaust gas. On the other hand, when the porous body of the coated catalyst layer has a void fraction of void spaces of more than 63 vol.%, there is a possibility of the coated catalyst layer being separated from the cell walls. Still further, the coated catalyst layer contains noble metal, and so there is a possibility of it being difficult to have an adequate purification performance for purifying exhaust gas because aggregation of the noble metal occurs and an activation area of the noble metal decreases. It is more preferable for the porous body of the coated catalyst layer to have a void fraction of void spaces within a range of 53 vol.% to 63 vol.%.

The pores formed in the cell walls of the porous honeycomb base body are filled with the coated catalyst layer by a filling rate of not less than 40 vol.%. When the pores are filled with the coated catalyst layer by a filling rate of less than 40 vol.%, there is a possibility of it being easily separated from the cell walls the coated catalyst layer having a high void fraction of void spaces within the range of 50 vol.% to 63 vol.%, as previously described.

It is more preferable to have the filling rate of not less than 55 vol.%, and furthermore preferable to have the filling rate of not less than 65 vol.%, and most preferable to have the filling rate of not less than 70 vol.%. In other words, it is more preferable to have the filling rate of the pores in the cell walls with the coated catalyst layer within a range of 57 to 85 vol.%, and more preferable to have the filling rate within a range of 74 to 85 vol.%. The filling rate is a ratio (a percentage) of a volume of the pores filled with the coated catalyst layer to a volume of the pores of the porous honeycomb base body before the coated catalyst layer is supported by the cell walls.

It is possible to use a porous honeycomb base body comprised of a plurality of cells formed along an axial direction of the porous honeycomb base body in which the cells are partitioned by the cell walls arranged in a polygonal lattice-like arrangement, for example. It is possible to use a porous base body, as the porous honeycomb base body, made of the ceramic, for example, cordierite, SiC, zeolite, silica, alumina, etc. It is preferable to use cordierite as the ceramic. Because using cordierite produces the porous honeycomb base body having a low thermal expansion coefficient and an excellent thermal resistance, it is possible for the porous honeycomb base body to show excellent durability when the catalyst supporting body having the porous honeycomb base body is used under high temperature condition.

The coated catalyst layer is a layer having a purification performance for purifying exhaust gas.

The coated catalyst layer is supported on the surfaces of the cell walls, and the pores formed in the cell walls are also filled with the coated catalyst layer.

It is preferable to form the coated catalyst layer from the surfaces of the cell walls toward the inside of the cells by a thickness of at least not less than 1 $\mu$m.

This structure makes it possible to further improve the reactivity with the exhaust gas passing in the inside of the cells.

It is possible for the coated catalyst layer to be comprised of a supporting layer made of alumina, promoter catalyst particles supported by the supporting layer, and a noble metal catalyst supported by the promoter catalyst particles (as recited in claim 2). This case makes it possible to easily form the coated catalyst layer comprised of the porous body having a void fraction of void spaces within a range of 50 to 63 vol.% (more preferable, within a range of 53 to 63 vol.%) by forming pores in the supporting layer.

It is possible to constitute the promoter catalyst particles of an aggregate such as composite oxide particles which contain essential components of Ce and Zr and not less than one kind of particles selected from alumina, zirconia, ceria and silica, for example. It is possible to use Pt, Pd, Rh, etc. as the noble metal particles.

Next, it is acceptable that a lamination comprised of a plurality of covering catalyst layers is formed on the coated catalyst layer formed on the surfaces of the cell walls in the catalyst supporting body, and the lamination of the covering catalyst layers has a purification performance for purifying exhaust gas and is different in catalyst component from the coated catalyst layer (as recited in claim 3).

Specifically, it is possible to form, as the coated catalyst layer, a layer containing Pd, for example, as noble metal of the catalyst component, and form a layer (as the covering catalyst layer) containing Rh, for example, as noble metal of the catalyst component on the coated catalyst layer. In addition, it is possible to form a single layer or a plurality of layers of not less than two layers as the covering catalyst body.

Further, it is possible to form one kind of the coated catalyst layer containing noble metal such as Pt as the catalyst component without forming any covering catalyst layer.

It is possible to produce the catalyst supporting body by performing the immersing step and the firing step. In the immersing step, the porous honeycomb base body is immersed into the catalyst slurry in which catalyst material and burned-away material to be used for forming the coated catalyst layer in the firing step are dispersed. It is possible to use the noble metal catalyst particles and the promoter catalyst particles, etc. as the catalyst material. It is possible to use, as the burned-away material, carbon, various types of resin materials, wheat flour, starch, etc. which are burned away during the firing step.

It is possible to constitute, as the catalyst slurry, a combination of the noble metal catalyst particles, the promoter catalyst particles, the burned-away material, alumina sol, water, etc.

It is possible to use, as the porous honeycomb base body, a porous body having a porosity within a range of 40 to 60 vol.% comprised of a plurality of the cells partitioned by the cell walls arranged in a polygonal lattice-like arrangement, as previously described.

In the immersing step, a combination of a kind of the catalyst slurry and the porous honeycomb base body is selected so that a cumulative frequency at an intersection point between the pore distribution map and the particle size distribution map becomes not less than 80 %.

It is possible to determine the cumulative frequency at the above intersection point by suitably adjusting an average pore size and a porosity of the porous honeycomb base body, an average particle size of various types of particles such as the promoter catalyst particles contained in the catalyst slurry, a combination ratio of various types of particles contained in the catalyst slurry, etc.

When the cumulative frequency at the intersection point between the pore distribution map and the particle size distribution map becomes less than 80 %, there is a possibility of the coated catalyst layer being easily separated from the porous honeycomb base body after completion of the firing step because it becomes difficult for the catalyst slurry to enter the inside of the pores in the porous honeycomb base body during the immersing step.

The pore distribution map indicates a relationship between pore sizes of pores formed in the porous honeycomb base body and a cumulative frequency of the pores (based on condition in decreasing order in pore size from the maximum pore size). It is possible to obtain the pore distribution map on the basis of a mercury intrusion method, for example, in which a lateral axis indicates a pore size ($\mu$m) and a vertical axis indicates the cumulative frequency (%) of the pores in decreasing order in pore size from the maximum pore size.

The particle size distribution map indicates a relationship between particle size of particles in the catalyst slurry and a cumulative frequency of the particles (based on condition in increasing order in particle size from the minimum particle size). For example, it is possible to obtain the particle size distribution map on the basis of a laser diffraction-scattering method, in which a lateral axis indicates the particle size ($\mu$m) and a vertical axis indicates the cumulative frequency (%) of the particles in increasing order in particle size from the minimum particle size.

In the firing step, the coated catalyst layer is formed by drying the porous honeycomb base body processed by the immersing step in order to eliminate water component from the porous honeycomb base body, and firing the porous honeycomb base body at a firing temperature within a temperature range of 300 to 600 °C, for example. It is possible to adjust the firing temperature on the basis of the composition of the coated catalyst layer.

It is possible to arrange the catalyst supporting body in an exhaust gas passage in order to eliminate CO, NO and carbon monoxide, etc. contained in exhaust gas to purify the exhaust gas. In particular, it is possible to use the catalyst supporting body in order to purify exhaust gas emitted from a gasoline engine. This case makes it possible to use the porous honeycomb base body having the cell walls, a thickness of which is within a range of 50 to 150 $\mu$m.

(First exemplary embodiment)

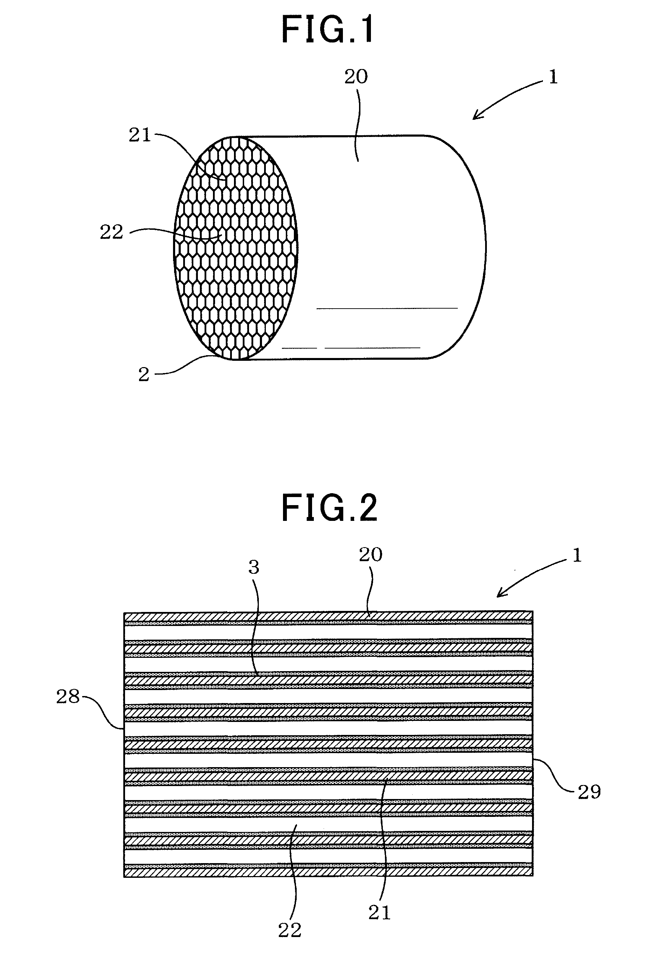

Next, a description will be given of exemplary embodiments of the catalyst supporting body with reference to FIG. 1 to FIG. 4.

The first exemplary embodiment produces the catalyst supporting body comprised of the coated catalyst layer formed on the porous honeycomb base body and the covering catalyst layer formed on the coated catalyst layer, and evaluates a performance of the produced catalyst supporting body.

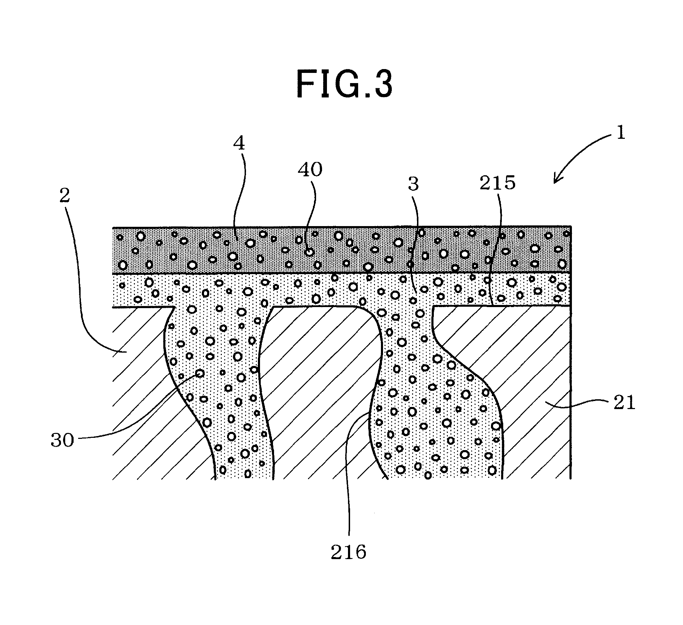

As shown in FIG. 1 and FIG. 2, the catalyst supporting body 1 according to the exemplary embodiment is comprised of the porous honeycomb base body 2 having a porosity within a range of 40 to 60 vol.%. The porous honeycomb base body 2 is comprised of a plurality of the cells 22 partitioned by the cell walls 21 arranged in a lattice-like shaped arrangement. The coated catalyst layer 3 having a purification performance to purify exhaust gas is supported at least on the cell walls 21 of the porous honeycomb base body 2. As shown in FIG. 3, the coated catalyst layer 3 is made of the porous body having a void fraction of void spaces within a range of 50 to 63 vol.%. The coated catalyst layer 3 is supported on the surfaces 215 of the cell walls 21. In addition, the inside of the pores 216 formed in the cell walls 21 is filled with the coated catalyst layer 3.

A description will now be given of a detailed explanation of the catalyst supporting body (sample 1).

As shown in FIG. 1, the porous honeycomb base body 2 in the catalyst supporting body 1 according to the exemplary embodiment approximately has a cylindrical shape. The porous honeycomb base body 2 has the cell walls 21 which are substantially arranged in a hexagonal lattice-like shaped arrangement in the inside of an outer skin 20 of the cylindrical shape. As shown in FIG. 1 and FIG. 2, a plurality of the cells 22 partitioned by the cell walls 21 is formed to extend along an axial direction from one end surface 28 to the other end surface 29 of the porous honeycomb base body 2.

The porous honeycomb base body 2 is a porous body made of cordierite. As shown in FIG. 3, pores 216 are formed in the cell walls 21. The exemplary embodiment uses the porous honeycomb base body 2 having a porosity of 53 % in which the pores 216 has an average pore size of 12 $\mu$m and the cell walls 21 has a thickness of 90 $\mu$m.

It is possible to detect an average pore size and a porosity of the porous honeycomb base body 2 by using a mercury intrusion porosimeter (auto-pore IV9500 series, manufactured by SHIMADZU CORPORATION).

As shown in FIG. 2 and FIG. 3, the coated catalyst layer 3 is formed on/in the cell walls 21 of the porous honeycomb base body 2 in the catalyst supporting body 1 according to the exemplary embodiment.

The coated catalyst layer 3 is comprised of the supporting layer (not shown) made of alumina, promoter catalyst particles ($ZrO_2$-$CeO_2$-$Nd_2O_3$/$Al_2O_3$, not shown) supported by the supporting layer, and a noble metal catalyst (Pd, not shown) supported by the promoter catalyst particles. The coated catalyst layer 3 having a thickness of not less than 1 $\mu$m is formed on the cell walls 21. In addition, the inside of the pores 216 of the cell walls 21 is filled with the coated catalyst layer 3. The coated catalyst layer 3 is comprised of a porous body having a plurality of pores 30.

In the catalyst supporting body 1 according to the exemplary embodiment shown in FIG. 3, a lamination comprised of a plurality of the covering catalyst layers 4 is formed on the coated catalyst layer 3 formed on the surfaces of the cell walls 21. The lamination of the covering catalyst layers 4 has a purification performance for purifying exhaust gas and is different in catalyst component from the coated catalyst layer 3.

The covering catalyst layer 4 is comprised of a supporting layer made of alumina, promoter catalyst particles ($ZrO_2$-$CeO_2$-$La_2O_3$/$Al_2O_3$, + BaO) supported by the supporting layer, and a noble metal catalyst (Rh) supported by the promoter catalyst particles. The covering catalyst layer 4 is comprised of a porous body having a plurality of pores 40.

Next, a description will now be given of the method of manufacturing the catalyst supporting body according to the exemplary embodiment.

The catalyst supporting body according to the exemplary embodiment is manufactured by performing the immersing step and the firing step.

In the immersing step, the porous honeycomb base body is immersed into the catalyst slurry in which catalyst material and burned-away material to be used for forming the coated catalyst layer by performing a firing step are dispersed. At this time, a combination of a kind of catalyst slurry and the porous honeycomb base body is selected so that a cumulative-frequency at an intersection point between a pore distribution map and a particle size distribution map becomes not less than 80 %. The pore distribution map indicates a relationship between pore sizes of pores formed in the porous honeycomb base body and a cumulative-frequency of the pores (in decreasing order in pore size from the maximum pore size). The particle size distribution map indicates a relationship between particle size in the catalyst slurry and a cumulative-frequency of the particles (in increasing order in particle size from the minimum particle size).

In the firing step, the porous honeycomb base body processed by the immersing step is dried and fired in order to form the coated catalyst layer in the porous honeycomb base body.

A description will now be given of the detailed explanation of the method of manufacturing the catalyst supporting body according to the exemplary embodiment.

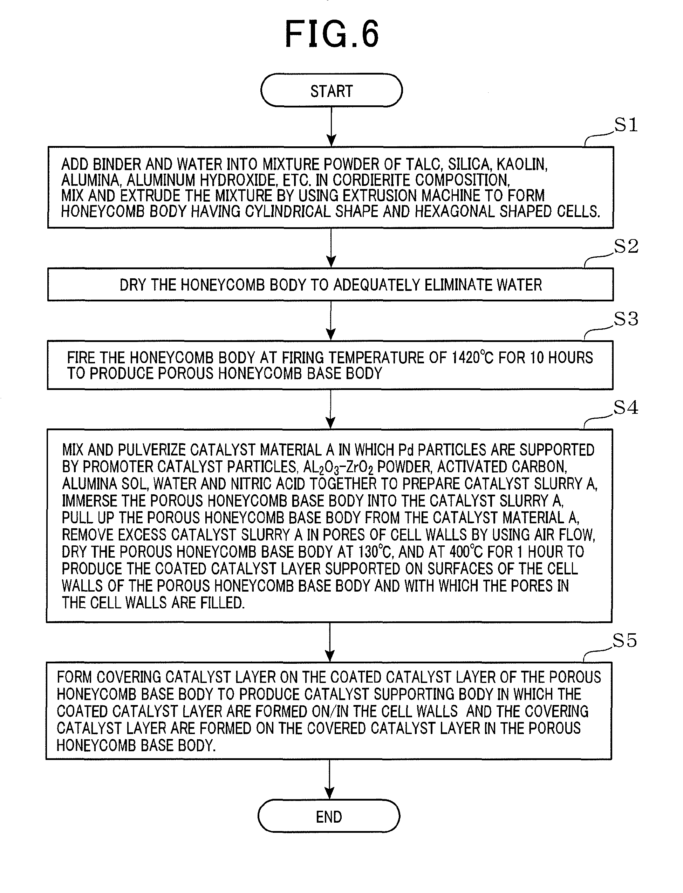

FIG. 6 is a view showing a flow chart of a method for manufacturing the catalyst supporting body according to the first exemplary embodiment shown in FIG. 1.

First, a porous honeycomb base body made of cordierite was prepared (step S1). Specifically, talc, silica, kaolin, alumina and aluminum hydroxide were mixed to have a cordierite composition, and a binder and water were added into the obtained mixture having the cordierite composition, and mixed together in order to adjust a plasticity of the mixture. The obtained mixture was extruded by using an extrusion machine to make a honeycomb shaped body having a cylindrical shape and hexagonal shaped cells partitioned by the cell walls having a thickness of 90 $\mu$m.

Next, the honeycomb shaped body was dried in order to adequately eliminate water contained in the honeycomb shaped body (step S2). The honeycomb shaped body was fired at a firing temperature of 1420 °C for 10 hours (step S2). The firing step used a temperature rising speed of 40 °C/ h during a temperature range of 1000 to 1400 °C in order to rise a temperature of the porous honeycomb base body from the room temperature to a firing temperature (the maximum temperature) of 1420 °C.

This produced the porous honeycomb base body having an average pore size of 12 $\mu$m, a cell wall thickness of 90 $\mu$m, a porosity of 53 %, a volume of 0.92 L and a cell density of 600 numbers/ inch$^2$.

Next, a coated catalyst layer was formed on the cell walls of the porous honeycomb base body (step S3). Specifically, active composite oxide powder of $ZrO_2$-$CeO_2$-$Nd_2O_3$ having a specific surface area of 70 m$^2$/ g and $\gamma$-$Al_2O_3$ powder were added to and mixed in Pd nitride solution. The mixed solution was dried at a temperature of 150°C for a whole day and night. The dried mixture was fired at a temperature of 400°C for one hour to produce a catalyst material (hereinafter, referred to as the "catalyst material A") in which Pd particles were supported by promoter catalyst particles comprised of an aggregate of composite oxide particles of $ZrO_2$-$CeO_2$-$Nd_2O_3$ and $\gamma$-$Al_2O_3$ particles.

Next, 175g of the catalyst material A, 25g of $Al_2O_3$-$ZrO_2$ powder, 60 g of activated carbon, 25g of alumina sol, 230g of water and 10g of nitric acid were mixed in a magnetic ball mill and pulverized to obtain a catalyst slurry (hereinafter, referred to as the "catalyst slurry A"). At this time, the catalyst slurry A was adjusted to have an average particle size of 1 $\mu$m. This average particle size indicates a particle size (D50) on an integrated value of 50 % in a particle size distribution obtained on the basis of a laser diffraction-scattering method. Specifically, the average particle size of the catalyst slurry A was measured by using a laser diffraction-scattering particle size analyzer LA-920 manufactured by HORIBA, Ltd.

Next, the porous honeycomb base body was immersed into the catalyst material A, and pulled up from the catalyst material A. Following this, an excess of the catalyst slurry A in the cells of the porous honeycomb base body was removed by using airflow. The porous honeycomb base body was dried at a temperature of 130°C, and fired at a temperature of 400 °C for one hour.

The method produced the porous honeycomb base body in which the coated catalyst layer was supported on the surfaces of the cell walls and the pores in the cell walls were filled with the coated catalyst layer.

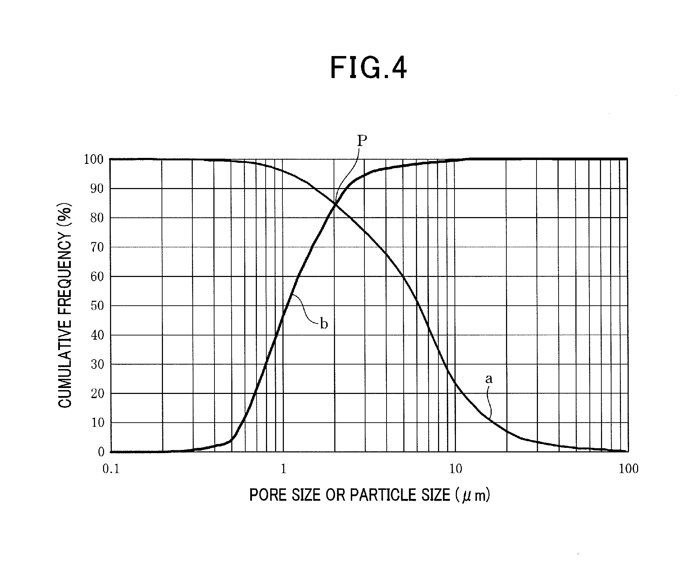

In the exemplary embodiment, a relationship between the pore size and the cumulative frequency (in decreasing order in pore size from the maximum pore size) of the pores in the porous honeycomb base body was measured by using a mercury intrusion porosimeter (auto-pore IV9500 series, manufactured by SHIMADZU CORPORATION). FIG. 4 shows one example of the measurement results. In FIG. 4, the curve a indicates the relationship (as the pore size distribution map) between the pore size and the cumulative frequency of the pores.

In addition, a relationship between the particle size of the particles in the catalyst slurry and the cumulative frequency (in increasing order in particle size from the minimum particle size) of the particles was measured by using a laser diffraction-scattering particle size analyzer LA-920, manufactured by HORIBA, Ltd. FIG. 4 shows one example of the measurement results. In FIG. 4, the curve b indicates the relationship (as the particle size distribution map) between the particle size and the cumulative frequency of the particles.

As shown in FIG. 4, the exemplary embodiment had a cumulative frequency of 91 % at the intersection point P between the curve a and the curve b, and selected the porous honeycomb base body and the catalyst material A so that the cumulative frequency at the intersection point P becomes not less than 80 %.

Next, the covering catalyst layer was formed on the coated catalyst layer in the porous honeycomb base body (step S5).

Specifically, active composite oxide powder of $ZrO_2$-$CeO_2$-$La_2O_3$ having a specific surface area of 70 m$^2$/ g and $\gamma$-$Al_2O_3$ powder were added to and mixed in Rh nitride solution. The mixed solution was dried at a temperature of 150 °C for a whole day and night. The dried mixture was fired at a temperature of 400 °C for one hour to produce a catalyst material (hereinafter, referred to as the "catalyst material B") in which Rh particles were supported by promoter catalyst particles comprised of an aggregate of composite oxide particles of $ZrO_2$-$CeO_2$-$La_2O_3$ and $\gamma$-$Al_2O_3$ particles.

Next, 175g of the catalyst material A, 25g of $Al_2O_3$-$ZrO_2$ powder, 60 g of activated carbon, 25g of alumina sol, 230g of water, 10g of nitric acid and 10 g of barium carbonate were mixed in a magnetic ball mill and pulverized to obtain a catalyst slurry (hereinafter, referred to as the "catalyst slurry B"). At this time, the catalyst slurry B was adjusted to have an average particle size of 1 $\mu$m. This average particle size indicates a particle size (D50) on an integrated value of 50 % in a particle size distribution obtained on the basis of a laser diffraction-scattering method. Specifically, the average particle size of the catalyst slurry B was measured by using a laser diffraction-scattering particle size analyzer LA-920, manufactured by HORIBA, Ltd.

Next, the porous honeycomb base body in which the coated catalyst layer was immersed into the catalyst material B, and pulled up from the catalyst material B. Following this, an excess of the catalyst slurry B in the cells of the porous honeycomb base body was removed by using airflow. The porous honeycomb base body was dried at a temperature of 130°C, and then fired at a temperature of 400 °C for one hour. This produced the covering catalyst layer on the coated catalyst layer (step S5).

As previously described, the exemplary embodiment produced the catalyst supporting body 1 in which the coated catalyst layer 3 and the covering catalyst layer 4 were formed on/in the cell walls 21 of the porous honeycomb base body 2 (see FIG. 1 to FIG. 3). The produced catalyst supporting body 1 will be also referred to as the sample 1.

Table 1 shows the following values of the sample 1:

types of the noble metal catalyst and the promoter catalyst in the coated catalyst layer;
an average particle size ($\mu$m) of particles contained in the catalyst slurry used for forming the coated catalyst layer;
an amount (g/ L) of noble metal contained in the coated catalyst layer supported in the porous honeycomb base body;
a mixture ratio (parts by mass) of activated carbon in 100 parts by mass of a total sum of the catalyst material A and $Al_2O_3$-$ZrO_2$ powder in the catalyst slurry;
types of the noble metal catalyst and the promoter catalyst in the covering catalyst layer;
an average particle size ($\mu$m) of particles contained in the catalyst slurry used for forming the covering catalyst layer;
an amount (g/ L) of noble metal contained in the covering catalyst layer supported in the porous honeycomb base body;
a mixture ratio (parts by mass) of activated carbon in 100 parts by mass of a total sum of the catalyst material B and $Al_2O_3$-$ZrO_2$ powder in the catalyst slurry used for forming the covering catalyst layer;
an average particle size ($\mu$m) of the porous honeycomb base body;
a thickness ($\mu$m) of the cell walls in the porous honeycomb base body; and
a porosity of the porous honeycomb base body.

Table 1 further shows a cumulative frequency (%) at an intersection point P between the pore distribution map (curve a) and the particle size distribution map (curve b), where the pore distribution map indicates a relationship between pore sizes of pores formed in the porous honeycomb base body and a cumulative frequency of the pores (in decreasing order in pore size from the maximum pore size), and the particle size distribution map indicates a relationship between particle size of particles in the catalyst slurry and a cumulative frequency of the particles (in increasing order in particle size from the minimum particle size) of the catalyst slurry.

A void fraction of void spaces in the coated catalyst layer of the sample 1 was detected. The void fraction can be measured on the basis of binary data obtained from captured image data by using a discriminant analysis method.

Specifically, the catalyst supporting body as the sample 1 was embedded in epoxy resin, and a surface of the catalyst supporting body was polished so that the surface (in which the cell walls can be observed in a polygonal-like lattice-like shape), which faces in vertical direction to an exhaust gas flowing passage, can be observed. Next, the coated catalyst layer on the surfaces of and in the cell walls of the porous honeycomb base body was observed by 500x magnification of a scanning electron microscope (SEM VE-8800, manufactured by KEYENCE CORPORATION) to obtain SEM image data of 72 x 72 dpi resolution. At this time, although it is not specify any position in the SEM image data, a pore area which does not contain the coated catalyst layer is eliminated.

Next, the obtained SEM image data was converted to monochrome image data in order to perform easy binarization. Next, noises were eliminated from the monochrome image data in order to smooth non-uniform illumination. Next, the monochrome image data, from which noises had been eliminated, was treated in binarization on the basis of a discriminant analysis method by using image processing software (Winroof, etc., manufactured by MITANI CORPORATION). Next, a total area of void spaces (white color parts) in the obtained binary image data was measured, and an area rate thereof was calculated. The calculated area rate was used as a void rate $V_A$ of the coated catalyst layer. The area to be selected in the binary image data contained the area of the coated catalyst layer and a bottom part of a ravine formed between the porous honeycomb base body and the coated catalyst layer because the coated catalyst layer and the porous honeycomb base body were shown with different concentration in the SEM image data. In order to increase the measurement accuracy, the measurement was performed for 30 points in the obtained binary image data. Table 1 shows the measurement results.

Similar to the coated catalyst layer, a void fraction of void spaces in the covering catalyst layer was measured. Table 1 shows the measurement results.

Further, a filling rate to fill the pores of the porous honeycomb base body with the coated catalyst layer in the sample 1 was measured.

Specifically, similar to the measurement of the void fraction previously described, the catalyst supporting body as the sample 1 was embedded in epoxy resin, and a surface of the catalyst supporting body was polished so that the surface (in which the cell walls can be observed in a polygonal lattice-like shaped arrangement), which faces in vertical direction to an exhaust gas flowing passage, can be observed. Next, the surfaces of the sample 1 was observed by 500x magnification of a scanning electron microscope (SEM VE-8800, manufactured by KEYENCE CORPORATION) to obtain SEM image data of 72 x 72 dpi resolution. At this time, although it is not specify any position in the SEM image data, a pore area which does not contain the coated catalyst layer is eliminated. At this time, the surfaces of the sample 1 was observed by an optional magnification (for example, by 250x magnification of the SEM VE-8800, manufactured by KEYENCE CORPORATION) when the entire one side of the cell wall (one side of a hexagonal shape) arranged in a polygonal lattice-like arrangement (a hexagonal lattice-like shaped arrangement in the exemplary embodiment) can be observed. The obtained SEM image data was treated in binarization on the basis of a discriminant analysis method by using the image processing software (Winroof, etc., manufactured by MITANI CORPORATION). An area rate (as the void fraction $V_B$) of one side of the cell wall was measured. Because this void fraction $V_B$ contains the voids in the coated catalyst layer in addition to the voids which were not filled with the coated catalyst layer in the porous honeycomb base body, the filling rate to fill the pores with the coated catalyst layer was adjusted to obtain a correct filling rate by using the following equation. In order to increase the measurement accuracy, the measurement was performed for 30 points in the obtained binary image data. Table 1 shows the measurement results.

$$F = (P - V_B) / (100 - V_A) / P \times 100,$$

where F indicates a filling rate, P indicates a porosity (%) of the porous honeycomb base body, $V_A$ indicates a void fraction of void spaces in the coated catalyst layer, and $V_B$ indicates a void fraction of void spaces in the porous honeycomb base body (cell walls) filled with the coated catalyst layer.

In addition, the exemplary embodiment prepared fifteen kinds of catalyst supporting bodies (sample 2 to sample 16) which were produced under different conditions. Like the sample 1, the sample 2 to the sample 16 were the catalyst supporting bodies comprised of the porous honeycomb base body, the coated catalyst layer formed on/in the cell walls of the porous honeycomb base body and the covering catalyst layer formed on the coated catalyst layer.

The sample 2 was produced by the same method of producing the sample 1, excepting the activated carbon having a mixture ratio of 40 parts by mass in the catalyst slurry (the catalyst slurry A and the catalyst slurry B) used for forming the coated catalyst layer and the covering catalyst layer.

The sample 3 was produced by the same method of producing the sample 1, excepting the porous honeycomb base body having a porosity of 40 %. The exemplary embodiment adjusted the porosity of the porous honeycomb base body by changing the conditions of the firing step.

The sample 4 was produced by the same method of producing the sample 1, excepting the activated carbon and the porous honeycomb base body, where the activated carbon had a mixture ratio of 40 parts by mass in the catalyst slurry (the catalyst slurry A and the catalyst slurry B) used for forming the coated catalyst layer and the covering catalyst layer, and the porous honeycomb base body having a porosity of 40 %. The exemplary embodiment adjusted the porosity of the porous honeycomb base body by changing the conditions of the firing step.

The sample 5 was produced by the same method of producing the sample 1, excepting the porous honeycomb base body having a porosity of 60 %. The exemplary embodiment adjusted the porosity of the porous honeycomb base body by adding burned-away material (carbon), which were burned away in the firing step, to the raw material and changing the conditions of the firing step.

The sample 6 was produced by the same method of producing the sample 1, excepting the activated carbon and the porous honeycomb base body, where, the activated carbon had a mixture ratio of 40 parts by mass in the catalyst slurry (the catalyst slurry A and the catalyst slurry B) used for forming the coated catalyst layer and the covering catalyst layer, and the porous honeycomb base body had a porosity of 60 %. The exemplary embodiment adjusted the porosity of the porous honeycomb base body by adding burned-away material (carbon), which were burned away in the firing step, to the raw material and changing the conditions of the firing step.

The sample 7 was produced by the same method of producing the sample 1, excepting the cell walls having a thickness of 50 $\mu$m in the porous honeycomb base body. The exemplary embodiment adjusted the thickness of the cell walls of the porous honeycomb base body by changing the extrusion conditions.

The sample 8 was produced by the same method of producing the sample 1, excepting the activated carbon and the cell walls in the porous honeycomb base body, where the activated carbon had a mixture ratio of 40 parts by mass in the catalyst slurry (the catalyst slurry A and the catalyst slurry B) used for forming the coated catalyst layer and the covering catalyst layer, and the cell walls had a thickness of 100 μm in the porous honeycomb base body. The exemplary embodiment adjusted the thickness of the cell walls of the porous honeycomb base body by changing the extrusion conditions.

The sample 9 was produced by the same method of producing the sample 1, excepting the catalyst slurry and the porous honeycomb base body, where the catalyst slurry contained no activated carbon (as the catalyst slurry A and the catalyst slurry B) used for forming the coated catalyst layer and the covering catalyst layer, and the porous honeycomb base body had an average pore size of 7 μm. The exemplary embodiment adjusted the average pore size of the porous honeycomb base body by changing the conditions of the firing step.

The sample 10 was produced by the same method of producing the sample 1, excepting the catalyst slurry and the porous honeycomb base body, where the catalyst slurry (as the catalyst slurry A and the catalyst slurry B) had an average particle size of 4 μm and contained no activated carbon used for forming the coated catalyst layer and the covering catalyst layer, and the porous honeycomb base body had an average pore size of 7 μm. The exemplary embodiment adjusted the average particle size of the catalyst slurry by changing the mixing conditions of the ball mill, and the average pore size of the porous honeycomb base body by changing the conditions of the firing step.

The sample 11 was produced by the same method of producing the sample 1, excepting the catalyst slurry and the porous honeycomb base body, where the catalyst slurry (as the catalyst slurry A and the catalyst slurry B) had an average particle size of 4 μm and contained no activated carbon used for forming the coated catalyst layer and the covering catalyst layer, and the porous honeycomb base body had an average pore size of 7 μm and a porosity of 40 %. The exemplary embodiment adjusted the average particle size of the catalyst slurry by changing the mixing conditions of the ball mill, and the average pore size and the porosity of the porous honeycomb base body by changing the conditions of the firing step.

The sample 12 was produced by the same method of producing the sample 1, excepting the catalyst slurry and the porous honeycomb base body, where the catalyst slurry (as the catalyst slurry A and the catalyst slurry B) had an average particle size of 4 μm and contained no activated carbon used for forming the coated catalyst layer and the covering catalyst layer, and the porous honeycomb base body had an average pore size of 7 μm and a porosity of 60 %. The exemplary embodiment adjusted the average pore size of the catalyst slurry by changing the mixing conditions of the ball mill, and the average pore size and the porosity of the porous honeycomb base body by adding burned-away material (carbon), which was burned away in the firing step, to the raw material, and changing the conditions of the firing step.

The sample 13 was produced by the same method of producing the sample 1, excepting the activated carbon and the porous honeycomb base body, where, the activated carbon had a mixture ratio of 45 parts by mass in the catalyst slurry (the catalyst slurry A and the catalyst slurry B) used for forming the coated catalyst layer and the covering catalyst layer, and the porous honeycomb base body had a porosity of 60 %. The exemplary embodiment adjusted the porosity of the porous honeycomb base body by adding burned-away material (carbon) which was burned away in the firing step, to the raw material and changing the conditions of the firing step.

The sample 14 was produced by the same method of producing the sample 1, excepting the catalyst slurry and the porous honeycomb base body, where the catalyst slurry (as the catalyst slurry A and the catalyst slurry B) had an average particle size of 4 μm and contained the activated carbon of 45 parts by mass used for forming the coated catalyst layer and the covering catalyst layer, and the porous honeycomb base body had an average pore size of 7 μm and a porosity of 40 %. The exemplary embodiment adjusted the average particle size of the catalyst slurry by changing the mixing conditions of the ball mill, and the average pore size and the porosity of the porous honeycomb base body by changing the conditions of the firing step.

The sample 15 was produced by the same method of producing the sample 1, excepting the catalyst slurry and the porous honeycomb base body, where the catalyst slurry (as the catalyst slurry A and the catalyst slurry B) had an average particle size of 4 μm and contained no activated carbon used for forming the coated catalyst layer and the covering catalyst layer, and the porous honeycomb base body had an average pore size of 7 μm, a thickness of the cell walls of 50μm and a porosity of 40 %. The exemplary embodiment adjusted the average particle size of the catalyst slurry by changing the mixing conditions of the ball mill, and the thickness of the cell walls by changing the extrusion conditions, and the average pore size and the porosity of the porous honeycomb base body by changing the conditions of the firing step.

The sample 16 was produced by the same method of producing the sample 1, excepting the catalyst slurry and the porous honeycomb base body, where the catalyst slurry (as the catalyst slurry A and the catalyst slurry B) had an average particle size of 4 μm and contained no activated carbon used for forming the coated catalyst layer and the covering catalyst layer, and the porous honeycomb base body had an average pore size of 7 μm and a thickness of the cell walls of 100μm. The exemplary embodiment adjusted the average particle size of the catalyst slurry by changing the mixing conditions of the ball mill, and the thickness of the cell walls by changing the extrusion conditions, and the average pore size of the porous honeycomb base body by changing the conditions of the firing step.

Similar to the sample 1, the exemplary embodiment obtained the following various values of the samples 2 to 16 produced by the method previously described. Table 1 and Table 2 show the various values of the samples 2 to 16:

types of the noble metal catalyst and the promoter catalyst in the coated catalyst layer;

an average particle size ($\mu$m) of particles contained in the catalyst slurry used for forming the coated catalyst layer;

an amount (g/ L) of noble metal contained in the coated catalyst layer supported in the porous honeycomb base body;

a mixture ratio (parts by mass) of activated carbon in 100 parts by mass of a total sum of the catalyst material A and $Al_2O_3$-$ZrO_2$ powder in the catalyst slurry;

a void fraction of void spaces in the coated catalyst layer;

a filling ratio to fill the pores of the porous honeycomb base body with the coated catalyst layer;

types of the noble metal catalyst and the promoter catalyst in the covering catalyst layer;

an average particle size ($\mu$m) of particles contained in the catalyst slurry used for forming the covering catalyst layer;

an amount (g/ L) of noble metal contained in the covering catalyst layer supported in the porous honeycomb base body;

a mixture ratio (parts by mass) of activated carbon in 100 parts by mass of a total sum of the catalyst material B and $Al_2O_3$-$ZrO_2$ powder in the catalyst slurry used for forming the covering catalyst layer;

a void fraction of void spaces in the covering catalyst layer;

an average pore size ($\mu$m) of the porous honeycomb base body;

a thickness ($\mu$m) of the cell walls in the porous honeycomb base body;

a porosity (%) of the porous honeycomb base body; and

a cumulative frequency (%) at an intersection point P.

[Table 1]

| | COATED CATALYST LAYER | | | | | | |
|---|---|---|---|---|---|---|---|
| Sample No. | Kind of noble metal catalyst | Kind of promotive catalyst | Average particle size (µm) of catalyst slurry | Amount (g/L) of noble metal catalyst | Mixture ratio (parts by mass) of activated carbon | Void fraction (%) | Filling ratio (%) of coated catalyst layer to porous honeycomb base body |
| 1 | Pd | $ZrO_2$-$CeO_2$-$Nd_2O_3$/$Al_2O_3$ | 1.0 | 2.6 | 30.0 | 53.0 | 82.0 |
| 2 | Pd | $ZrO_2$-$CeO_2$-$Nd_2O_3$/$Al_2O_3$ | 1.0 | 2.6 | 40.0 | 63.0 | 74.0 |
| 3 | Pd | $ZrO_2$-$CeO_2$-$Nd_2O_3$/$Al_2O_3$ | 1.0 | 2.6 | 30.0 | 53.0 | 78.0 |
| 4 | Pd | $ZrO_2$-$CeO_2$-$Nd_2O_3$/$Al_2O_3$ | 1.0 | 2.6 | 40.0 | 63.0 | 65.0 |
| 5 | Pd | $ZrO_2$-$CeO_2$-$Nd_2O_3$/$Al_2O_3$ | 1.0 | 2.6 | 30.0 | 53.0 | 83.0 |
| 6 | Pd | $ZrO_2$-$CeO_2$-$Nd_2O_3$/$Al_2O_3$ | 1.0 | 2.6 | 40.0 | 63.0 | 78.0 |
| 7 | Pd | $ZrO_2$-$CeO_2$-$Nd_2O_3$/$Al_2O_3$ | 1.0 | 2.6 | 30.0 | 53.0 | 85.0 |
| 8 | Pd | $ZrO_2$-$CeO_2$-$Nd_2O_3$/$Al_2O_3$ | 1.0 | 2.6 | 40.0 | 63.0 | 57.0 |

[Table 1]                                                                                     (2/3)

| | COVERING CATALYST LAYER | | | | | |
|---|---|---|---|---|---|---|
| Sample No. | Kind of noble metal catalyst | Kind of promotive catalyst | Average particle size (µm) of catalyst slurry | Amount (g/L) of noble metal catalyst | Mixture ratio (parts by mass) of activated carbon | Void fraction (%) |
| 1 | Rh | $ZrO_2$-$CeO_2$-$La_2O_3$/$Al_2O_3$+BaO | 1.0 | 0.2 | 30.0 | 53.0 |
| 2 | Rh | $ZrO_2$-$CeO_2$-$La_2O_3$/$Al_2O_3$+BaO | 1.0 | 0.2 | 40.0 | 63.0 |
| 3 | Rh | $ZrO_2$-$CeO_2$-$La_2O_3$/$Al_2O_3$+BaO | 1.0 | 0.2 | 30.0 | 53.0 |
| 4 | Rh | $ZrO_2$-$CeO_2$-$La_2O_3$/$Al_2O_3$+BaO | 1.0 | 0.2 | 40.0 | 63.0 |
| 5 | Rh | $ZrO_2$-$CeO_2$-$La_2O_3$/$Al_2O_3$+BaO | 1.0 | 0.2 | 30.0 | 53.0 |
| 6 | Rh | $ZrO_2$-$CeO_2$-$La_2O_3$/$Al_2O_3$+BaO | 1.0 | 0.2 | 40.0 | 63.0 |
| 7 | Rh | $ZrO_2$-$CeO_2$-$La_2O_3$/$Al_2O_3$+BaO | 1.0 | 0.2 | 30.0 | 53.0 |
| 8 | Rh | $ZrO_2$-$CeO_2$-$La_2O_3$/$Al_2O_3$+BaO | 1.0 | 0.2 | 40.0 | 63.0 |

[Table 1]                                                                                     (3/3)

| Sample No. | Average pore size (μm) | Thickness (μm) of cell wall | Porosity (%) | Cumulative frequency (%) at intersection point P |
|---|---|---|---|---|
| 1 | 12.0 | 90.0 | 53.0 | 91 |
| 2 | 12.0 | 90.0 | 53.0 | 96 |
| 3 | 12.0 | 90.0 | 40.0 | 80 |
| 4 | 12.0 | 90.0 | 40.0 | 88 |
| 5 | 12.0 | 90.0 | 60.0 | 93 |
| 6 | 12.0 | 90.0 | 60.0 | 99 |
| 7 | 12.0 | 50.0 | 53.0 | 91 |
| 8 | 12.0 | 100.0 | 53.0 | 95 |

*(POROUS HONEYCOMB BASE BODY)*

[Table 2]                                                                (1/3)

COATED CATALYST LAYER

| Sample No. | Kind of noble metal catalyst | Kind of promotive catalyst | Average particle size (μm) of catalyst slurry | Amount (g/L) of noble metal catalyst | Mixture ratio (parts by mass) of activated carbon | Void fraction (%) | Filling ratio (%) of coated catalyst layer to porous honeycomb base body |
|---|---|---|---|---|---|---|---|
| 9 | Pd | $ZrO_2$-$CeO_2$-$Nd_2O_3$/$Al_2O_3$ | 1.0 | 2.6 | 0.0 | 37.0 | 72.0 |
| 10 | Pd | $ZrO_2$-$CeO_2$-$Nd_2O_3$/$Al_2O_3$ | 4.0 | 2.6 | 0.0 | 45.0 | 41.0 |
| 11 | Pd | $ZrO_2$-$CeO_2$-$Nd_2O_3$/$Al_2O_3$ | 4.0 | 2.6 | 0.0 | 45.0 | 34.0 |
| 12 | Pd | $ZrO_2$-$CeO_2$-$Nd_2O_3$/$Al_2O_3$ | 4.0 | 2.6 | 0.0 | 45.0 | 45.0 |
| 13 | Pd | $ZrO_2$-$CeO_2$-$Nd_2O_3$/$Al_2O_3$ | 1.0 | 2.6 | 45.0 | 65.0 | 78.0 |
| 14 | Pd | $ZrO_2$-$CeO_2$-$Nd_2O_3$/$Al_2O_3$ | 4.0 | 2.6 | 45.0 | 65.0 | 57.0 |
| 15 | Pd | $ZrO_2$-$CeO_2$-$Nd_2O_3$/$Al_2O_3$ | 4.0 | 2.6 | 0.0 | 45.0 | 36.0 |
| 16 | Pd | $ZrO_2$-$CeO_2$-$Nd_2O_3$/$Al_2O_3$ | 4.0 | 2.6 | 0.0 | 45.0 | 25.0 |

[Table 2]                                                                (2/3)

COVERING CATALYST LAYER

| Sample No. | Kind of noble metal catalyst | Kind of promotive catalyst | Average particle size (μm) of catalyst slurry | Amount (g/L) of noble metal catalyst | Mixture ratio (parts by mass) of activated carbon | Void fraction (%) |
|---|---|---|---|---|---|---|
| 9 | Rh | $ZrO_2$-$CeO_2$ | 1.0 | 0.2 | 0.0 | 37.0 |

|  |  | -La$_2$O$_3$/Al$_2$O$_3$ +BaO |  |  |  |  |
|---|---|---|---|---|---|---|
| 10 | Rh | ZrO$_2$-CeO$_2$ -La$_2$O$_3$/Al$_2$O$_3$ +BaO | 4.0 | 0.2 | 0.0 | 45.0 |
| 11 | Rh | ZrO$_2$-CeO$_2$ -La$_2$O$_3$/Al$_2$O$_3$ +BaO | 4.0 | 0.2 | 0.0 | 45.0 |
| 12 | Rh | ZrO$_2$-CeO$_2$ -La$_2$O$_3$/Al$_2$O$_3$ +BaO | 4.0 | 0.2 | 0.0 | 45.0 |
| 13 | Rh | ZrO$_2$-CeO$_2$ -La$_2$O$_3$/Al$_2$O$_3$ +BaO | 1.0 | 0.2 | 45.0 | 65.0 |
| 14 | Rh | ZrO$_2$-CeO$_2$ -La$_2$O$_3$/Al$_2$O$_3$ +BaO | 4.0 | 0.2 | 45.0 | 65.0 |
| 15 | Rh | ZrO$_2$-CeO$_2$ -La$_2$O$_3$/Al$_2$O$_3$ +BaO | 4.0 | 0.2 | 0.0 | 45.0 |
| 16 | Rh | ZrO$_2$-CeO$_2$ -La$_2$O$_3$/Al$_2$O$_3$ +BaO | 4.0 | 0.2 | 0.0 | 45.0 |

[Table 2]

(3/3)

| | POROUS HONEYCOMB BASE BODY | | | Cumulative frequency (%) at intersection point P |
|---|---|---|---|---|
| Sample No. | Average pore size (μm) | Thickness (μm) of cell wall | Porosity (%) | |
| 9 | 7.0 | 90.0 | 53.0 | 78 |
| 10 | 7.0 | 90.0 | 53.0 | 63 |
| 11 | 7.0 | 90.0 | 40.0 | 56 |
| 12 | 7.0 | 90.0 | 60.0 | 68 |
| 13 | 7.0 | 90.0 | 60.0 | 93 |
| 14 | 7.0 | 90.0 | 40.0 | 82 |
| 15 | 7.0 | 50.0 | 40.0 | 56 |
| 16 | 7.0 | 100.0 | 53.0 | 63 |

Next, the exemplary embodiment evaluated the purification performance for purifying exhaust gas of the catalyst supporting bodies as the sample 1 to the sample 16.

The purification performance for purifying exhaust gas was evaluated by comparing a HC conversion rate of each of the samples. In order to obtain such a HC conversion rate, the catalyst supporting body as each of the samples was mounted to an exhaust gas pipe of a motor vehicle equipped with gasoline engine of 3500 cc displacement. Next, a HC concentration of exhaust gas was detected at an inlet and an outlet of the catalyst supporting body when a temperature of the inlet of the catalyst supporting body was 480 °C. A HC conversion rate T can be calculated by the following equation, where B indicates a HC concentration of exhaust gas at the inlet of the catalyst supporting body, and A indicates a HC concentration of the exhaust gas at the outlet of the catalyst supporting body:

$$T\ (\%) = (B - A)\ /\ B \times 100.$$

Table 3 shows a HC conversion rate of each of the samples.

It was detected that the presence of separating the coated catalyst layer from the porous honeycomb base body in the catalyst supporting body as each of the test samples.

Specifically, after the measurement of the HC conversion rate, the catalyst supporting body as each of the samples was broken, and the coated catalyst layer of each sample was observed in a gas flowing direction (in a direction to which the cells are extended) of the porous honeycomb base body and a vertical direction thereof by using a scanning electron microscope (SEM).

The samples are indicated with reference character "x" when the separation of the coated catalyst layer was observed. On the other hand the samples are indicated with reference character "o" when no separation is observed. Table 3 indicates these observation results.

[Table 3]

| Sample | HC conversion rate (%) | Occurrence of separation |
|---|---|---|
| 1 | 99.2 | O |
| 2 | 99.4 | O |
| 3 | 98.0 | O |
| 4 | 98.2 | O |
| 5 | 99.0 | O |
| 6 | 99.2 | O |
| 7 | 99.1 | O |
| 8 | 98.0 | O |
| 9 | 92.6 | O |
| 10 | 94.0 | O |
| 11 | 93.2 | O |
| 12 | 94.5 | O |
| 13 | 85.0 | X |
| 14 | 60.0 | X |
| 15 | 94.8 | O |
| 16 | 93.9 | O |

As shown in Table 1 to Table 3, because the coated catalyst layer comprised of the porous body having a high void fraction of void spaces within a range of 50 to 63 vol.% in the samples 1 to 8, it can be understood for the samples 1 to 8 to have a very high HC conversion rate, and an excellent purification performance for purifying exhaust gas. Further, the inside of the pores in the porous honeycomb base body in the test samples 1 to 8 was filled with the coated catalyst layer by a high filling rate. Accordingly, even if the coated catalyst layer having a high void fraction was formed in the samples 1 to 8, as previously described, the separation of the coated catalyst layer from the porous honeycomb base body hardly occurred and the samples 1 to 8 show an excellent purification performance previously described.

On the other hand, the samples 9 to 12, the sample 15 and the sample 16 had an insufficient purification performance of purifying exhaust gas because of having the coated catalyst layer having a low void fraction. Further, the separation of the coated catalyst layer occurred in the samples 13 and 14 equipped with the coated catalyst layer having a large void fraction, the purification performance of the samples 13 and 14 was drastically decreased even if the coated catalyst layer had a high filling rate.

As consideration of a plurality of the samples previously described, for example, the samples 1 to 8 have excellent characteristics for diffusing exhaust gas in the coated catalyst layer and an excellent purification performance for purifying the exhaust gas, where the samples 1 to 8 are the catalyst supporting body in which the coated catalyst layer comprised of the porous body having a void fraction of void spaces within a range of 50 to 63 vol.% (more preferable within a range of 53 to 63 vol.%) is supported at least on/in the cell walls of the porous honeycomb base body having a porosity within a range of 40 to 60 vol.%. In the coated catalyst layer, like the samples 1 to 8, having the coated catalyst layer supported on the surfaces of the cell walls and the pores in the cell walls which are filled with the coated catalyst layer by a filling rate of not less than 40 vol.% (more preferable to have the filling rate within a range of 57 to 85 vol.%, and most preferable within a range of 74 to 85 vol.%), because the coated catalyst layer having a high void fraction within a range of 50 to 63 vol.% is adequately supported, it is possible to prevent the separation of the coated catalyst layer from the porous honeycomb base body. In addition, as a result of the observation at not less than 30 observation points, it can be estimated that uniform void spaces are formed in the coated catalyst layer.

(Second exemplary embodiment)

Although the covering catalyst layer is formed on the coated catalyst layer in the first exemplary embodiment, the second exemplary embodiment produces the catalyst supporting body having the coated catalyst layer only without forming any covering catalyst layer.

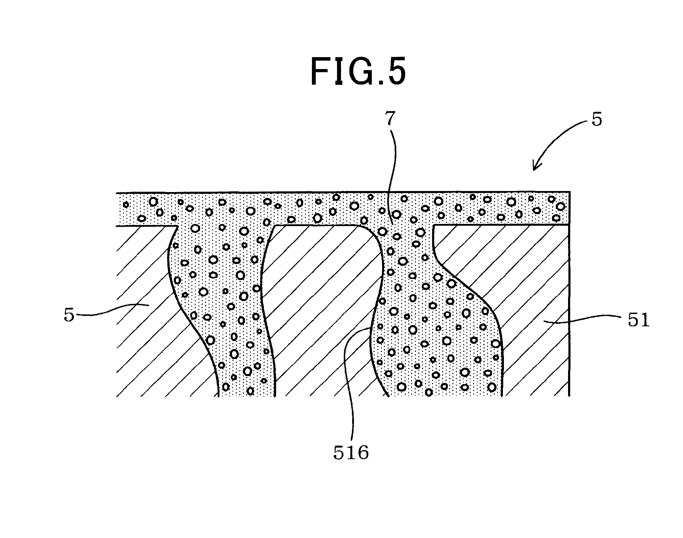

FIG. 5 is a partial enlarged view showing the cell walls in the catalyst supporting body according to the second exemplary embodiment. As shown in FIG. 5, in the catalyst supporting body of the second exemplary embodiment, the coated catalyst layer 7 having a predetermined void fraction was supported on the surfaces of the cell walls 51 in the porous honeycomb base body 5 and the pores 516 formed in the cell walls 31 were filled with in the coated catalyst layer. The coated catalyst layer 7 contains Pt as noble metal catalyst. In the second exemplary embodiment, the coated catalyst layer 7 is only formed on the cell walls 51 of the porous honeycomb base body 5 without forming any covering catalyst layer on the coated catalyst layer 7. The coated catalyst layer of the first exemplary embodiment is covered with the covering catalyst layer. Other components of the catalyst supporting body of the second exemplary embodiment are the same of those of the first exemplary embodiment.

A description will be given of the explanation of manufacturing the catalyst supporting body according to the second exemplary embodiment.

Specifically, the porous honeycomb base body was produced by using the same method of the first exemplary embodiment. The second exemplary embodiment produced the porous honeycomb base body having a porosity of 45 % by using the firing conditions which were different from the firing conditions of the first exemplary embodiment. The porous honeycomb base body of the second exemplary embodiment is the same of the porous honeycomb base body of the first exemplary embodiment excepting the porosity.

Next, the coated catalyst layer was formed on the cell walls of the porous honeycomb base body.

Specifically, active composite oxide powder of $ZrO_2$-$CeO_2$-$La_2O_3$ having a specific surface area of 70 $m^2$/ g and $\gamma$-$Al_2O_3$ powder were added to and mixed in Pd nitride solution. The mixed solution was dried at a temperature of 150 °C for a whole day and night. The dried mixture was fired at a temperature of 400 °C for one hour to produce a catalyst material in which Pt particles were supported by promoter catalyst particles comprised of an aggregate of composite oxide particles of $ZrO_2$-$CeO_2$-$La_2O_3$ and $\gamma$-$Al_2O_3$ particles.

Next, 175g of the catalyst material, 25g of $Al_2O_3$-$ZrO_2$ powder, 60 g of activated carbon, 25g of alumina sol, 230g of water, 10g of nitric acid and 10g of barium carbonate were mixed in a magnetic ball mill and pulverized to obtain catalyst slurry. At this time, the catalyst slurry was adjusted to have an average particle size of 0.90 $\mu$m. This average particle size indicates a particle size (D50) on an integrated value of 50 % in a particle size distribution obtained on the basis of a laser diffraction-scattering method. Specifically, the average particle size of the catalyst slurry was measured by using a laser diffraction-scattering particle size analyzer LA-920 manufactured by HORIBA, Ltd.

Next, the porous honeycomb base body was immersed into the catalyst material, and pulled up from the catalyst material A. Following this, an excess of the catalyst slurry in the cells of the porous honeycomb base body was removed by using airflow. The porous honeycomb base body was dried at a temperature of 130 °C, and fired at a temperature of 400 °C for one hour.

This produced the porous honeycomb base body in which the coated catalyst layer was supported on the surfaces of the cell walls and the pores in the cell walls were filled with the coated catalyst layer. The catalyst supporting body produced by the method previously described will be referred to as the sample 17.

In addition, the exemplary embodiment prepared three kinds of catalyst supporting bodies (a sample 18 to a sample 20) which were produced under different conditions. Like the sample 17, the sample 18 to the sample 20 were the catalyst supporting bodies comprised of the porous honeycomb base body, the coated catalyst layer formed on/in the cell walls of the porous honeycomb base body, without having any covering catalyst layer. In the first exemplary embodiment previously described, the covering catalyst layer is formed on the coated catalyst layer.

The sample 18 was produced by the same method of producing the sample 17, excepting the catalyst slurry used for forming the coated catalyst layer, where the catalyst slurry had an average particle size of 0.85 $\mu$m and contained the activated carbon of 40 parts by mass used for forming the coated catalyst layer. The exemplary embodiment adjusted the average particle size of the catalyst slurry by changing by changing the mixing conditions of the ball mill.

The sample 19 was produced by the same method of producing the sample 17, excepting the catalyst slurry used for forming the coated catalyst layer and the porous honeycomb base body, where the catalyst slurry had an average particle size of 0.85 $\mu$m and contained the activated carbon of 40 parts by mass used for forming the coated catalyst layer, and the porous honeycomb base body had a porosity of 53 %. The exemplary embodiment adjusted the average particle size of the catalyst slurry by changing by changing the mixing conditions of the ball mill, and the porosity of the porous honeycomb base body by changing the conditions of the firing step.

The sample 20 was produced by the same method of producing the sample 17, excepting the catalyst slurry used for forming the coated catalyst layer and the porous honeycomb base body, where the catalyst slurry had an average particle size of 0.85 $\mu$m and contained the activated carbon of 40 parts by mass used for forming the coated catalyst layer, and the porous honeycomb base body had an average pore size of 7 $\mu$m. The exemplary embodiment adjusted the average particle size of the catalyst slurry by changing by changing the mixing conditions of the ball mill, and the average particle size of the porous honeycomb base body by changing the conditions of the firing step.

Similar to the first exemplary embodiment, the second exemplary embodiment obtained the pore distribution map of the produced catalyst supporting bodies (sample 17 to sample 20) by using a mercury intrusion porosimeter (auto-pore IV9500 series, manufactured by SHIMADZU CORPORATION). Like the first exemplary embodiment, the pore distribution map indicates a relationship between pore sizes of pores formed in the porous honeycomb base body and a cumulative frequency of the pores (in decreasing order in pore size from the maximum pore size).

Furthermore, similar to the first exemplary embodiment, the second exemplary embodiment obtained the pore distribution map of the produced catalyst supporting bodies (sample 17 to sample 20) by using the laser diffraction-scattering particle size analyzer LA-920, manufactured by HORIBA, Ltd. Like the first exemplary embodiment, the particle size distribution map indicates a relationship between particle size of particles in the catalyst slurry and a cumulative frequency of the particles (in increasing order in particle size from the minimum particle size) of the catalyst slurry. The second exemplary embodiment obtained a cumulative frequency at an intersection point (which corresponds to the point P shown in FIG. 4 according to the first exemplary embodiment) between the pore distribution map and the particle size distribution map.

Similar to the first exemplary embodiment, the second exemplary embodiment obtained the following various values of the samples 17 to 20. Table 4 shows the various values of the samples 17 to 20:

types of the noble metal catalyst and the promoter catalyst in the coated catalyst layer;
an average particle size ($\mu$m) of particles contained in the catalyst slurry used for forming the coated catalyst layer;
an amount (g/ L) of noble metal contained in the coated catalyst layer supported in the porous honeycomb base body;
a mixture ratio (parts by mass) of activated carbon in 100 parts by mass of a total sum of the catalyst material A and $Al_2O_3$-$ZrO_2$ powder in the catalyst slurry;
a void fraction of void spaces in the coated catalyst layer;
a filling ratio to fill the pores of the porous honeycomb base body with the coated catalyst layer;
an average pore size ($\mu$m) of particles contained in the porous honeycomb base body;
a thickness ($\mu$m) of the cell walls in the porous honeycomb base body;
a porosity (%) of the porous honeycomb base body; and
a cumulative frequency (%) at an intersection point P.

In addition, similar to the first exemplary embodiment, the second exemplary embodiment measured the HC conversion rate and evaluated the occurrence of separating the coated catalyst layer from the porous honeycomb base body in each of the test samples. Table 4 shows the results of the measurement and evaluation.

## [Table 4]
(1/2)

| | | | COATED CATALYST LAYER | | | | |
|---|---|---|---|---|---|---|---|
| Sample No. | Kind of noble metal catalyst | Kind of promotive catalyst | Average particle size (μm) of catalyst slurry | Amount (g/L) of noble metal catalyst | Mixture ratio (parts by mass) of activated carbon | Void fraction (%) | Filling ratio (%) of coated catalyst layer to porous honeycomb base body |
| 17 | Pt | $ZrO_2$-$CeO_2$-$La_2O_3$/$Al_2O_3$+BaO | 0.90 | 2.8 | 30 | 53.0 | 41.0 |
| 18 | Pt | $ZrO_2$-$CeO_2$-$La_2O_3$/$Al_2O_3$+BaO | 0.85 | 2.8 | 40 | 63.0 | 57.0 |
| 19 | Pt | $ZrO_2$-$CeO_2$-$La_2O_3$/$Al_2O_3$+BaO | 0.85 | 2.8 | 30 | 63.0 | 73.0 |
| 20 | Pt | $ZrO_2$-$CeO_2$-$La_2O_3$/$Al_2O_3$+BaO | 0.85 | 2.8 | 40 | 63.0 | 37.0 |

## [Table 4]
(2/2)

| | POROUS HONEYCOMB BASE BODY | | | Cumulative frequency (%) at intersection point P | HC conversion rate (%) | Occurrence of Separation |
|---|---|---|---|---|---|---|
| Sample No. | Average pore size (μm) | Thickness (μm) of cell wall | Porosity (%) | | | |
| 17 | 12.0 | 90.0 | 45.0 | 83 | 97.8 | O |
| 18 | 12.0 | 90.0 | 45.0 | 86 | 97.0 | O |
| 19 | 12.0 | 90.0 | 53.0 | 90 | 92.0 | O |
| 20 | 7.0 | 90.0 | 45.0 | 70 | 80.0 | X |

As can be understood from the results shown in FIG. 4, the pores in the porous honeycomb base body were filled with the coated catalyst layer by not less than 40 vol. % in the samples 17 to 19 produced by combining the porous honeycomb base body and the catalyst slurry to have the cumulative frequency at the intersection point P of not less than 80 %. On the other hand, because the pores in the porous honeycomb base body were not adequately filled with the coated catalyst layer, the coated catalyst layer was separated from the porous honeycomb base body in the sample 20 produced by combining the porous honeycomb base body and the catalyst slurry to have the cumulative frequency at the intersection point P of less than 80 %. The sample 20 had an insufficient purification performance of purifying exhaust gas.

As consideration of a plurality of the samples previously described, even if only the coated catalyst layer is formed in the porous honeycomb base body, it is possible to provide the catalyst supporting body having an excellent purification performance for purifying exhaust gas without causing any separation of the coated catalyst layer by forming the coated catalyst layer having a void fraction within a range of 50 to 63 vol.% (more preferable within a range of 53 to 63 vol.%) and a filling rate of not less than 40 vol.% (more preferable within a range of 57 to 85 vol.%, and most preferable within a range of 74 to 85 vol.%) to fill pores with the coated catalyst layer. Further, a combination of the porous honeycomb base body and the coated catalyst layer is selected so that the cumulative frequency at the intersection point P becomes not less than 80 %. This makes it possible to easily produce the catalyst supporting body having the coated catalyst layer having a void fraction within a range of 50 to 63 vol.% and a filling rate of not less than 40 % to fill the pores with the coated catalyst layer. After the observation of not less than 30 SEM images, it can be estimated that the voids having a uniform shape are formed in the coated catalyst layer as shown in FIG. 5.

[Explanation of reference numbers]

1 Catalyst supporting body,
2 Porous honeycomb base body,
3 Cell wall,
4 Cell, and
5 Coated catalyst layer.

## Claims

1. A catalyst supporting body comprising a porous honeycomb base body having a porosity within a range of 40 to 60 vol.%, the porous honeycomb base body comprising a plurality of cells partitioned by cell walls arranged in a lattice-like shape, a coated catalyst layer having a purification performance for purifying exhaust gas being supported at least on the cell walls of the porous honeycomb base body,
wherein the coated catalyst layer comprises a porous body having a void fraction of void spaces within a range of 50 to 63 vol.%,
the coated catalyst layer is supported on surfaces of the cell walls, and pores formed in the cell walls are filled with the coated catalyst layer by a filling rate of not less than 40 vol.%.

2. The catalyst supporting body according to claim 1, wherein the coated catalyst layer comprises: a supporting layer made of alumina; promoter catalyst particles supported by the supporting layer; and a noble metal catalyst supported by the promoter catalyst particles.

3. The catalyst supporting body according to claim 1 or 2, wherein a lamination comprising a plurality of covering catalyst layers is formed on the coated catalyst layer formed on the surfaces of the cell walls, and the lamination of the covering catalyst layers has a purification performance for purifying exhaust gas and is different in catalyst component from the coated catalyst layer.

4. The catalyst supporting body according to any one of claims 1 to 3, wherein the porous body of the coated catalyst layer has a void fraction of void spaces within a range of 53 vol.% to 63 vol.%.

5. The catalyst supporting body according to any one of claims 1 to 3, wherein the coated catalyst layer in the pores of the cell walls of the porous honeycomb base body has the filling rate within a range of 57 to 85 vol. %.

6. The catalyst supporting body according to any one of claims 1 to 3, wherein the coated catalyst layer in the pores of the cell walls of the porous honeycomb base body has the filling rate within a range of 74 to 85 vol. %.

7. A method of manufacturing the catalyst supporting body as claimed in any one of claims 1 to 3, comprising steps of:

immersing the porous honeycomb base body into a catalyst slurry in which catalyst material and burned-away material to be used for forming the coated catalyst layer by performing a firing step are dispersed; and
drying and firing the porous honeycomb base body processed by the immersing step in order to form the coated catalyst layer in the porous honeycomb base body,
wherein in the immersing step, a combination of a kind of the catalyst slurry and the porous honeycomb base body is selected so that a cumulative frequency at an intersection point between a pore distribution map and a particle size distribution map becomes not less than 80 %, wherein the pore distribution map indicates a relationship between pore sizes of pores formed in the porous honeycomb base body and a cumulative frequency of the pores in decreasing order in pore size from the maximum pore size, and the particle size distribution map indicates a relationship between particle size of particles in the catalyst slurry and a cumulative frequency of the particles in increasing order in particle size from the minimum particle size.

# FIG.1

# FIG.2

# FIG.3

# FIG.4

# FIG.5

# FIG.6

```
START
```

⬇

**S1**

ADD BINDER AND WATER INTO MIXTURE POWDER OF TALC, SILICA, KAOLIN, ALUMINA, ALUMINUM HYDROXIDE, ETC. IN CORDIERITE COMPOSITION, MIX AND EXTRUDE THE MIXTURE BY USING EXTRUSION MACHINE TO FORM HONEYCOMB BODY HAVING CYLINDRICAL SHAPE AND HEXAGONAL SHAPED CELLS.

⬇

**S2**

DRY THE HONEYCOMB BODY TO ADEQUATELY ELIMINATE WATER

⬇

**S3**

FIRE THE HONEYCOMB BODY AT FIRING TEMPERATURE OF 1420°C FOR 10 HOURS TO PRODUCE POROUS HONEYCOMB BASE BODY

⬇

**S4**

MIX AND PULVERIZE CATALYST MATERIAL A IN WHICH Pd PARTICLES ARE SUPPORTED BY PROMOTER CATALYST PARTICLES, $Al_2O_3$–$ZrO_2$ POWDER, ACTIVATED CARBON, ALUMINA SOL, WATER AND NITRIC ACID TOGETHER TO PREPARE CATALYST SLURRY A, IMMERSE THE POROUS HONEYCOMB BASE BODY INTO THE CATALYST SLURRY A, PULL UP THE POROUS HONEYCOMB BASE BODY FROM THE CATALYST MATERIAL A, REMOVE EXCESS CATALYST SLURRY A IN PORES OF CELL WALLS BY USING AIR FLOW, DRY THE POROUS HONEYCOMB BASE BODY AT 130°C, AND AT 400°C FOR 1 HOUR TO PRODUCE THE COATED CATALYST LAYER SUPPORTED ON SURFACES OF THE CELL WALLS OF THE POROUS HONEYCOMB BASE BODY AND WITH WHICH THE PORES IN THE CELL WALLS ARE FILLED.

⬇

**S5**

FORM COVERING CATALYST LAYER ON THE COATED CATALYST LAYER OF THE POROUS HONEYCOMB BASE BODY TO PRODUCE CATALYST SUPPORTING BODY IN WHICH THE COATED CATALYST LAYER ARE FORMED ON/IN THE CELL WALLS AND THE COVERING CATALYST LAYER ARE FORMED ON THE COVERED CATALYST LAYER IN THE POROUS HONEYCOMB BASE BODY.

⬇

```
END
```

## INTERNATIONAL SEARCH REPORT

| International application No. |
| --- |
| PCT/JP2012/068913 |

**A. CLASSIFICATION OF SUBJECT MATTER**
*B01J35/04*(2006.01)i, *B01D53/86*(2006.01)i, *B01D53/94*(2006.01)i, *B01J23/58*
(2006.01)i, *B01J35/10*(2006.01)i, *B01J37/02*(2006.01)i, *B01J37/08*(2006.01)i,
*F01N3/28*(2006.01)i

According to International Patent Classification (IPC) or to both national classification and IPC

**B. FIELDS SEARCHED**

Minimum documentation searched (classification system followed by classification symbols)
B01J35/04, B01D53/86, B01D53/94, B01J23/58, B01J35/10, B01J37/02,
B01J37/08, F01N3/28

Documentation searched other than minimum documentation to the extent that such documents are included in the fields searched
Jitsuyo Shinan Koho        1922-1996    Jitsuyo Shinan Toroku Koho    1996-2012
Kokai Jitsuyo Shinan Koho   1971-2012    Toroku Jitsuyo Shinan Koho    1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2003-245560 A  (Toyota Motor Corp.),<br>02 September 2003 (02.09.2003),<br>claims 1, 5, 6, 8 to 11; paragraphs [0008] to<br>[0016], [0028] to [0041]; examples; fig. 1, 5<br>(Family: none) | 1-7 |
| Y | JP 2004-330025 A  (Jonson Matthey Japan Inc.),<br>25 November 2004 (25.11.2004),<br>paragraphs [0009], [0010]; fig. 1<br>(Family: none) | 1-7 |

☒  Further documents are listed in the continuation of Box C.        ☐  See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 24 September, 2012 (24.09.12) | 09 October, 2012 (09.10.12) |

| Name and mailing address of the ISA/<br>Japanese Patent Office | Authorized officer |
| --- | --- |
| Facsimile No. | Telephone No. |

Form PCT/ISA/210 (second sheet) (July 2009)

**INTERNATIONAL SEARCH REPORT**

International application No.

PCT/JP2012/068913

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2004-175654 A  (Hitachi Metals, Ltd.),<br>24 June 2004 (24.06.2004),<br>claim 7; paragraph [0015]<br>& US 2006/0105139 A1    & US 2007/0158879 A1<br>& EP 1533032 A1       & EP 1837077 A2<br>& EP 2077154 A2       & EP 2077155 A2<br>& EP 2186562 A1       & EP 2189216 A1<br>& WO 2003/106028 A1 | 1-7 |
| A | JP 2006-314894 A  (Toyota Central Research and<br>Development Laboratories, Inc.),<br>24 November 2006 (24.11.2006),<br>entire text<br>(Family: none) | 1-7 |
| A | JP 2006-346656 A  (Toyota Motor Corp.),<br>28 December 2006 (28.12.2006),<br>entire text<br>& US 2010/0048392 A1    & EP 1893335 A1<br>& WO 2006/137558 A1     & KR 10-2008-0009334 A<br>& CN 101198406 A | 1-7 |
| A | JP 2010-142704 A  (Denso Corp.),<br>01 July 2010 (01.07.2010),<br>entire text<br>(Family: none) | 1-7 |
| A | JP 2008-510604 A  (Umicore AG. & Co. KG.),<br>10 April 2008 (10.04.2008),<br>entire text<br>& US 2009/0129995 A1    & EP 1789191 A1<br>& WO 2006/021336 A1     & KR 10-2007-0067098 A<br>& CN 101039749 A | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05184937 B

- JP 2002210370 A